# EUROPEAN PATENT SPECIFICATION

(11) **EP 2 632 159 B1**
(45) Date of publication and mention of the grant of the patent: **25.09.2019**
(21) Application number: 11834115.5
(22) Date of filing: 11.08.2011
(51) Int. Cl.: A63F 13/86

(54) **IMAGE PROCESSING SYSTEM, IMAGE PROCESSING METHOD, DYNAMIC IMAGE TRANSMISSION DEVICE, DYNAMIC IMAGE RECEPTION DEVICE, INFORMATION STORAGE MEDIUM, AND PROGRAM**
BILDVERARBEITUNGSSYSTEM, BILDVERARBEITUNGSVERFAHREN, VORRICHTUNG FÜR DYNAMISCHE BILDÜBERTRAGUNG, VORRICHTUNG FÜR DYNAMISCHEN BILDEMPFANG, INFORMATIONSSPEICHERMEDIUM UND PROGRAMM DAFÜR
SYSTÈME DE TRAITEMENT D'IMAGE, PROCÉDÉ DE TRAITEMENT D'IMAGE, DISPOSITIF DE TRANSMISSION D'IMAGE DYNAMIQUE, DISPOSITIF DE RÉCEPTION D'IMAGE DYNAMIQUE, SUPPORT DE STOCKAGE D'INFORMATIONS ET PROGRAMME

(30) Priority: 20.10.2010 JP 2010235923
(43) Date of publication of application: 28.08.2013
(60) Divisional application: 19191799.6
(73) Proprietor: Sony Interactive Entertainment Inc., Tokyo 108-8270 (JP)
(72) Inventor: IKENAGA, Toshiya, Tokyo 108-0075 (JP)
(74) Representative: D Young & Co LLP
(86) International application number: PCT/JP2011/068371
(87) International publication number: WO 2012/053273

(56) References cited:
- EP-A1- 1 739 916
- EP-A1- 2 000 188
- WO-A1-2009/152158
- WO-A1-2010/079790
- JP-A- 2001 016 202
- JP-A- 2002 281 406
- JP-A- 2004 343 795
- US-A1- 2003 038 805
- US-A1- 2009 209 348

## Description

### Technical Field

The present invention relates to an image processing system, an image processing method, a video transmitting device, a video receiving device, an information storage medium, and a program.

### Background Art

There has been technology for transmitting a video from a server to a terminal. US 7,734,104 discloses an image processing system capable of playing a video through efficient priority control of video streams that are transmitted/received over a network by attaching, as a priority tag, to headers of packets of a video stream, an importance level which is set for each image frame, and then transmitting the packets with priority tags to a network that is constituted of routers having a packet priority control function.

### Citation List

Previously proposed arrangements are disclosed in US 7,734,104 and WO 2009/152158.

### Summary of Invention

### Technical Problem

An example of possible methods by which a client outputs and displays a screen for displaying a plurality of videos is to distribute by streaming a plurality of videos from a server to a client so that the client generates a screen by combining respective frame images of these plurality of videos, and outputs and displays the screen.

Another possible method is to sequentially generate, on a server, screens containing composite images which are each obtained by combining respective frame images of a plurality of videos and distribute the screens by streaming from the server to a client so that the client outputs and displays the screens.

Under the condition that the former method is employed, the client is required to perform processing of generating the screen by decoding each of the plurality of videos. However, if the client has low processing performance, there may occur a situation in which the client is incapable of the processing or takes a very long time to finish generating the screen. In addition, if the server and the client are connected by a network that is narrow in bandwidth, the former method may threaten to use up the bandwidth.

Under the condition that the latter method is employed, on the other hand, the server is required to execute processing of generating the screen. In the case of distributing a video from the server to many clients, for example, there may occur a situation in which the overall service level is lowered.

Another fact to consider is that, depending on the performance of the client and the performance of the server, letting the client display one or a few videos selected from a plurality of videos is sometimes better than letting the client display a plurality of videos at once.

Thus, with regard to the number of videos that constitute the basis of a screen presented to a user, using many videos is suitable in some cases and using a few videos is suitable in other cases.

The present invention has been made in view of the problems described above, and an object of the present invention is therefore to provide an image processing system, an image processing method, a video transmitting device, a video receiving device, an information storage medium, and a program with which flexibility is enhanced in setting the number of videos that are transmitted from a video transmitting device to a video receiving device to constitute the basis of a screen presented to a user.

### Solution to Problem

The invention is defined in the independent claims. Preferred features are set out in the dependent claims.

### Brief Description of Drawings

[FIG. 1] A diagram illustrating an example of the overall configuration of a computer network according to an embodiment of the present invention.
[FIG. 2] A diagram illustrating an example of a game screen.
[FIG. 3] A diagram illustrating another example of the game screen.
[FIG. 4] A conceptual diagram illustrating an example of the relation between a cloud service and clients according to the embodiment.
[FIG. 5] A functional block diagram illustrating an example of functions that are implemented by the cloud service and clients according to the embodiment.
[FIG. 6] A diagram illustrating an example of attribute-settings association data.
[FIG. 7] A diagram illustrating an example of distribution settings data.
[FIG. 8] A diagram illustrating an example of a friend displaying screen.

### Description of Embodiments

An embodiment of the present invention is hereinafter described in detail referring to the drawings.

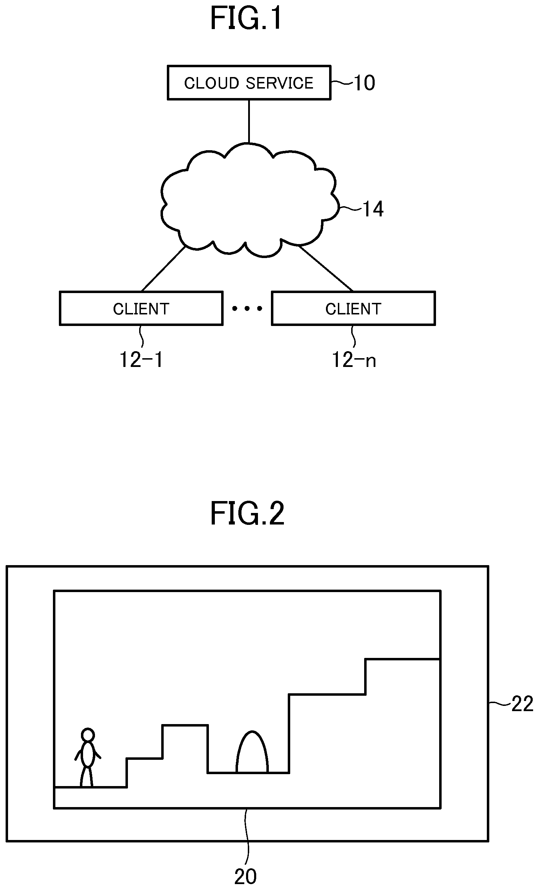

FIG. 1 is a diagram illustrating an example of the overall configuration of a computer network according to the embodiment of the present invention. As illustrated in FIG. 1, a cloud service 10 and clients 12 (12-1 to 12-n), which are all constructed based on computers, are connected to a computer network 14 such as the Internet. The cloud service 10 and the clients 12 can communicate to/from one another. In this embodiment, the cloud service 10 functions as a video transmitting device and the clients 12 each function as a video receiving device. The cloud service 10 and the clients 12 in this embodiment function as an image processing system on the whole.

Each of the clients 12 is a computer utilized by a user of the cloud service 10, and is, for example, a personal computer, a game console, a television set, a portable game device, or a portable information terminal. The client 12 includes, for example, a control device such as a CPU, a memory device such as a memory element including a ROM or a RAM, or a hard disk drive, an output device such as a display or a speaker, an input device such as a game controller, a touch pad, a mouse, a keyboard, or a microphone, a communication device such as a network board, and an optical disc drive that reads data from an optical disc such as a digital versatile disc (DVD)-ROM or Blu-ray (trademark) disc (computer-readable information storage medium).

The clients 12 according to this embodiment each have a Web browser and a client program which are pre-installed therein, and execute these application programs.

The cloud service 10 is, for example, a distributed computing environment, and includes, among others, a plurality of Web application servers, a plurality of database servers, and a plurality of storage devices which are connected in a manner that allows communication to/from one another. The servers included in the cloud service 10 each include, for example, a control unit such as a CPU, a storage unit which is a ROM, a RAM, or other types of memory element, or a hard disk drive, and a communication unit which is a communication interface such as a network board. Those components are connected via a bus.

The clients 12 using the cloud service 10 can use various services provided by the cloud service 10 without being particularly conscious of the locations of servers, storage devices, and other resources in the cloud service 10.

According to this embodiment, the clients 12 each access the cloud service 10 through the web browser, and input a user ID and a password. Then, under the condition that the client 12 accesses a predetermined URL, a screen corresponding to the predetermined URL is displayed on the display of the client 12. After the entry of the user ID and the password, the cloud service 10 can identify the user ID of the user who utilizes the client 12 by, for example, referring to a cookie.

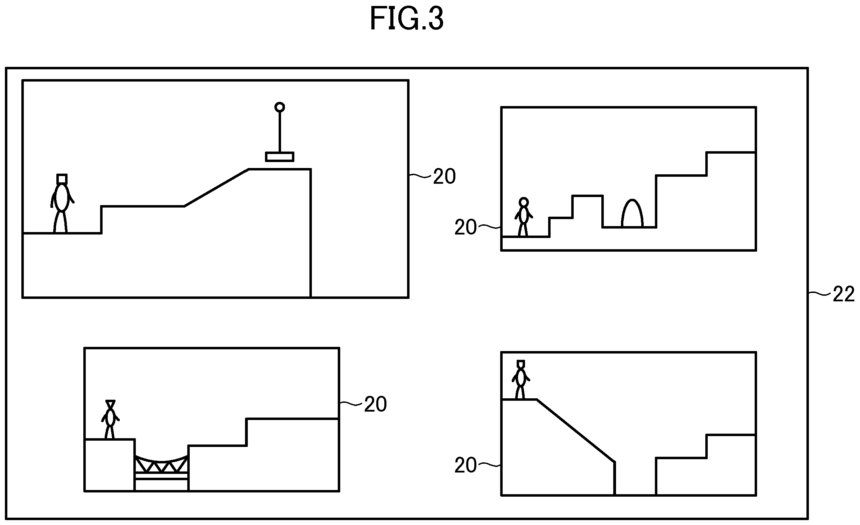

In this embodiment, under the condition that a user A, a user B, a user C, and a user D transmit, for example, a request to start executing a game in a mode allowing a plurality of users to play (multi-play) to the cloud service 10 from the respective clients 12, the cloud service 10 starts executing the game. The user IDs of the user A, the user B, the user C, and the user D are hereinafter "001", "002", "003", and "004", respectively. For the duration of the execution of the game, the cloud service 10 transmits by streaming an encoded video that shows the specifics of this game play session to each of the clients 12. In other words, the cloud service 10 sequentially transmits by streaming frame images 20 that show the specifics of this game play session to each of the clients 12. Each client 12 that has received the video decodes the video, generates a game screen 22 in which the frame images 20 of the decoded video are arranged, and outputs the game screen 22 to the display in order to display the game screen 22 (see FIG. 2 and FIG. 3). A video that includes a series of frame images 20 sequentially transmitted by streaming as described above to show the specifics of a game play session in progress is hereinafter referred to as play session video.

FIG. 2 illustrates an example of a game screen 22 that is displayed on the display of the client 12 of the user A. FIG. 3 illustrates an example of the game screen 22 that is displayed on the display of the client 12 of the user B. In the example of FIG. 3, the frame image 20 of the play session video of the user B is placed in the upper left section, and the frame images 20 of play session videos of the user A, the user C, and the user D are placed in the upper right section, the lower left section, and the lower right section, respectively.

This embodiment allows each user to enjoy a game by pressing a button on the game controller or the like while viewing a play session video. In this embodiment, each user performs an operation of moving a player object or other operations in a game through key input such as pressing a button on the game controller.

As illustrated in FIG. 2 and FIG. 3, there are cases in this embodiment where different game screens 22 are output to and displayed on the displays of the clients 12 of the respective users in multi-play in which the same game is played by a plurality of users. There are also cases in this embodiment where the number of play session videos transmitted from the cloud service 10 to the client 12 varies from one user to another in multi-play in which the same game is played by a plurality of users.

In this embodiment, under the condition that a user who is not playing the game (here, a user E, for example) transmits from his/her client 12 to the cloud service 10 a request to watch the game play session of the user A, the user B, the user C, and the user D, for example, the cloud service 10 distributes, for example, play session videos of the game played by the four users to the client 12 of the user E. The client 12 of the user E then outputs to the display the game screen 22 in which the frame images 20 of play session videos of the user A, the user B, the user C, and the user D are placed, for example, in the upper left section, the upper right section, the lower left section, and the lower right section, respectively, in order to display the game screen 22. The user E can thus view play session videos that show the specifics of a game play session played by the four users in this embodiment.

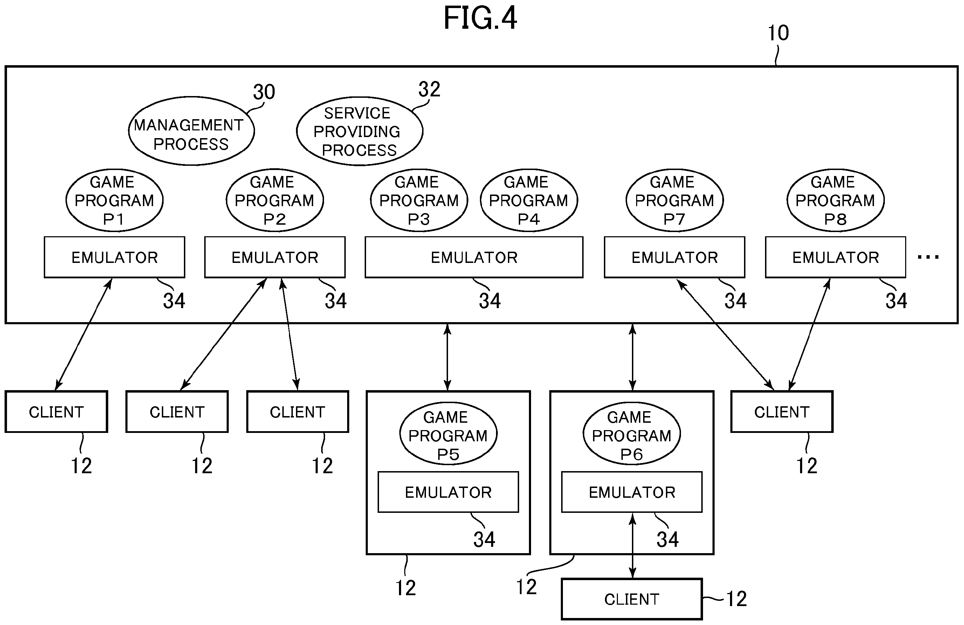

FIG. 4 is a conceptual diagram illustrating an example of the relation between the cloud service 10 and the clients 12 according to this embodiment. The cloud service 10 according to this embodiment executes, for example, a management process 30, a service providing process 32, and emulators 34. Image files of various game programs are stored in advance in storage devices and other memory devices that are included in the cloud service 10. The game programs are each associated with a game ID which is the identifier of a game.

The service providing process 32 is, for example, a process that is generated by a server included in the cloud service 10 by activating a program that implements one of various services provided by the cloud service 10, such as a shopping site and a social networking service (SNS).

The management process 30 is, for example, a process that is generated by a server included in the cloud service 10 by activating a management program which is installed in servers or storage devices included in the cloud service 10. The management process 30 executes processing of managing the location of the emulator 34, processing of activating the emulator 34, processing of shutting down the emulator 34, processing of connecting one of the clients 12 to the emulator 34 in response to a request from the client 12, processing of disconnecting one of the clients 12 from the emulator 34 in response to a request from the client 12, and the like.

The emulator 34 is, for example, a process that functions as a virtual machine for executing a game program stored in a server or a storage device that is included in the cloud service 10. The emulator 34 is generated by the management process 30 by activating, in response to a request from one of the clients 12, an emulator program installed in a server or a storage device that is included in the cloud service 10. The management process 30 then reads image files of a game program specified by the client 12 in response to a request from the client 12, and loads the image files onto the emulator 34. This causes the game program to be executed on the emulator 34. Alternatively, the emulator 34 may load a game program specified by the client 12 onto its own process.

In response to requests from the clients 12 or from the management process 30, the emulator 34 outputs, for example, an emulated memory image or register (e.g., a program counter) that is managed by the emulator 34, a log of input/output access made by a game program that runs on the emulator 34, and a log of CPU commands or GPU commands executed on the emulator 34.

This embodiment allows the exclusive use of one emulator 34 by one client 12 as illustrated in FIG. 4 (see a game program P1). This embodiment also allows a plurality of clients 12 to connect to one emulator 34 (see a game program P2) . This embodiment also allows one emulator 34 to execute a plurality of game programs (see game programs P3 and P4).

In this embodiment, in the case where an emulator program is installed in each client 12 as illustrated in FIG. 4, the management process 30 outputs an instruction to activate the emulator 34 or an instruction to shut down the emulator 34 to the client 12 in response to a request from the client 12. The client 12 responds to the activation instruction received from the management process 30 by activating the emulator program that is installed in the client 12. The client 12 responds to the shutdown instruction received from the management process 30 by shutting down the emulator 34 that is being run. This embodiment is also designed so that the emulator 34 running on the client 12 can execute a game program stored in the client 12 (see a game program P5) . This embodiment is also designed so that another client 12 can be connected to the emulator 34 running on the client 12 (see a game program P6).

This embodiment is also designed so that one client 12 can be connected to a plurality of emulators 34 as illustrated in FIG. 4 (see game program P7 and P9).

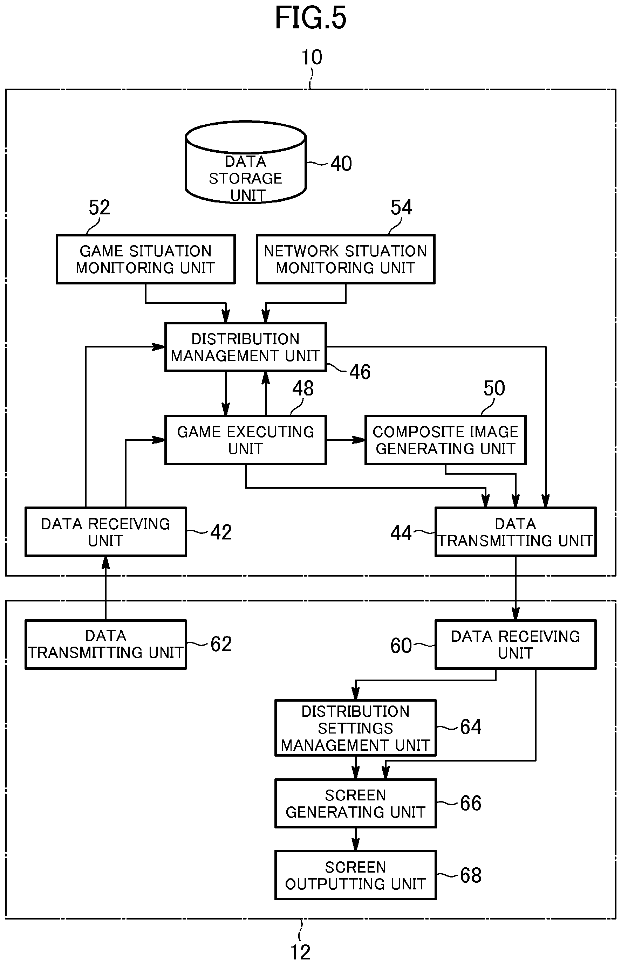

FIG. 5 is a functional block diagram illustrating an example of functions that are implemented by the cloud service 10 and clients 12 according to this embodiment. FIG. 5 illustrates only functions that have particular relevance to the following description, and other functions than those of FIG. 5 are also implemented in the cloud service 10 and clients 12 according to this embodiment.

As illustrated in FIG. 5, the cloud service 10 according to this embodiment includes, in terms of function, a data storage unit 40, a data receiving unit 42, a data transmitting unit 44, a distribution management unit 46, a game executing unit 48, a composite image generating unit 50, a game situation monitoring unit 52, and a network situation monitoring unit 54, for example. The data storage unit 40 is implemented mainly by, for example, a memory device such as a memory, a hard disk drive, or a storage device that is a component of a server included in the cloud service 10. The data receiving unit 42 and the data transmitting unit 44 are implemented mainly by network boards or other communication interfaces included in the cloud service 10. The game executing unit 48 corresponds to, for example, a function implemented by the emulator 34. The rest of the components corresponds to, for example, functions implemented by the management process 30.

As illustrated in FIG. 5, the clients 12 according to this embodiment each include, in terms of function, a data receiving unit 60, a data transmitting unit 62, a distribution settings management unit 64, a screen generating unit 66, and a screen outputting unit 68, for example. The data receiving unit 60 and the data transmitting unit 62 are implemented mainly by network boards or other communication interfaces included in the client 12. The distribution settings management unit 64 and the screen generating unit 66 are implemented mainly by a CPU or other control devices included in the client 12. The screen outputting unit 68 is implemented mainly by a display or other output devices included in the client 12.

The cloud service 10 is built with a computer as a main component as described above, and the respective functional components of FIG. 5 that the cloud service 10 serves as are implemented by executing a program. The program is provided to the cloud service 10 via, for example, a computer-readable information storage medium such as a CD-ROM or a DVD-ROM, or a communication network such as the Internet. Further, the client 12 is also built with a computer as a main component as described above, and the respective functional components of FIG. 5 that the client 12 serves as are implemented by executing the above-mentioned client program. The program is provided to the client 12 via, for example, a computer-readable information storage medium such as a CD-ROM or a DVD-ROM, or a communication network such as the Internet.

The distribution management unit 46 in this embodiment performs, for example, the activation or shutdown of the emulator 34 in response to a request from one of the clients 12. The distribution management unit 46 also executes processing of connecting one of the clients 12 to the emulator 34 in response to a request from the client 12, and processing of disconnecting one of the clients 12 from the emulator 34 in response to a request from the client 12. The distribution management unit 46 also loads image files of a game program onto the activated emulator 34. The distribution management unit 46 further executes processing of managing the location of the emulator 34.

In this embodiment, the data transmitting unit 62 of one client 12 transmits to the cloud service 10, for example, a request to start executing an action game in a mode allowing a plurality of users to play (multi-play) that is associated with attribute data of that client 12. The attribute data of each client 12 specifically indicates, for example, the name of the client 12, the display size of the client 12, the number of CPUs included in the client 12, the type of a CPU included in the client 12, the capacity of a hard disk drive included in the client 12, the size of a memory included in the client 12, the maximum communication speed of the client 12, whether or not the client 12 includes a touch pad, and the type of the client 12 (which one of a personal computer, a game console, a television set, a portable game device, and a portable information terminal the client 12 is). In the example given here, the clients 12 of the user A, the user B, the user C, and the user D each transmit a request to start executing an action game in a multi-play mode that is associated with its own attribute data. These start requests are received by the data receiving unit 42 of the cloud service 10.

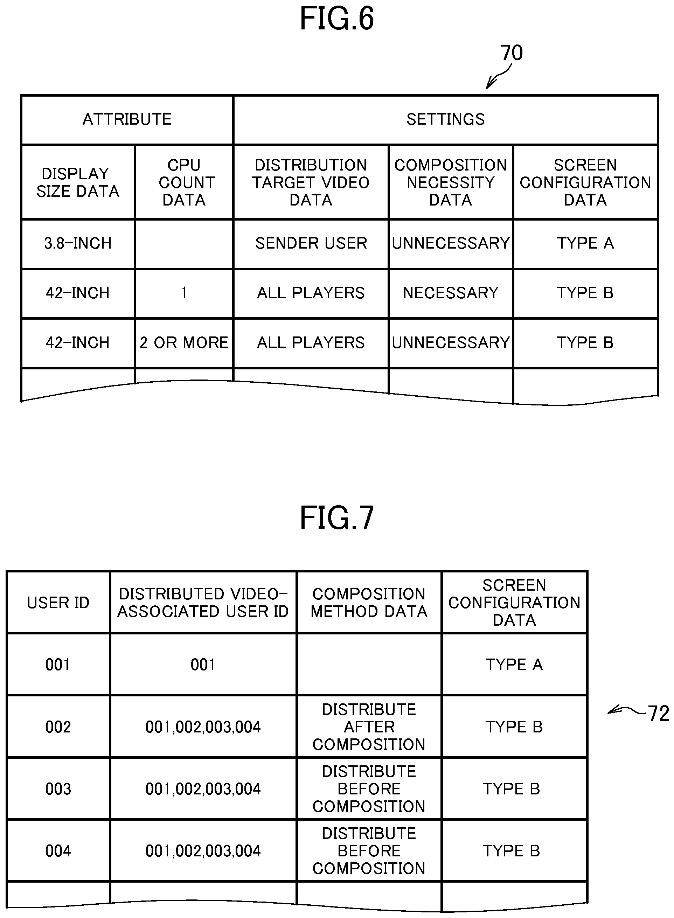

The data storage unit 40 in this embodiment stores in advance attribute-settings association data 70, an example of which is illustrated in FIG. 6. The attribute-settings association data 70 associates attributes that are indicated by the attribute data described above with the screen configuration of the game screen 22 to be output to the client 12 in question, a method of distributing a video to the client 12, and other settings. The attribute-settings association data 70 in the example of FIG. 6 associates a combination of display size data, which indicates the display size of the client 12, and CPU count data, which indicates the number of CPUs included in the client 12, with distribution target video data, which indicates at least one video to be distributed, composition necessity data, which indicates whether or not to combine the frame images 20 in the composite image generating unit 50, and screen configuration data, which indicates the screen configuration of the game screen 22.

The distribution target video data indicates, for example, whether to distribute a play session video of the user of the client 12 from which the game execution start request has been transmitted (hereinafter referred to as sender user) (this option is expressed as "sender user" in FIG. 6), or play session videos of all players who play the game in a multi-play mode (this option is expressed as "all players" in FIG. 6).

The term "screen configuration" in this embodiment refers to, for example, positions in the game screen 22 at which the frame images 20 of play session videos are placed (e.g., the position of each frame image 20 in the game screen 22 expressed in an X coordinate and a Y coordinate at which the upper left corner of the frame image 20 is placed), the size (e.g., the vertical and horizontal pixel counts of each frame image 20), and the resolution. This screen configuration is indicated by screen configuration data in this embodiment.

In the attribute-settings association data 70 of this embodiment, a value "3. 8-inch" of the display size data is associated with, for example, a value "type A" of the screen configuration data. A type-A screen configuration refers to, for example, a screen configuration in which the frame image 20 of the sender user's play session video is placed at the center as the one illustrated in FIG. 2.

In the attribute-settings association data 70 of this embodiment, a combination of a value "42-inch" of the display size data and a value "1" of the CPU count data, and a combination of a value "42-inch" of the display size data and a value "2" of the CPU count data, are associated with, for example, a value "type B" of the screen configuration data. A type-B screen configuration refers to, for example, a screen configuration in which the frame image 20 of the sender user's play session video is placed in the upper left section, and the frame images 20 of other users' play session videos are placed at random in the upper right section, the lower right section, and the lower left section, as the one illustrated in FIG. 3. The type-B screen configuration sets the frame image 20 of the sender user's play session video larger in size than the frame images 20 of the other users' play session videos. The screen configuration data may thus set different screen configurations to the frame image 20 of the sender user and to the frame images 20 of other users.

The distribution management unit 46 of the cloud service 10 generates distribution settings data 72 which indicates settings about video distribution and an example of which is illustrated in FIG. 7. The distribution settings data 72 indicates, for example, the screen configuration of the game screen 22 at the client 12 in question, a play session video to be distributed, and a method of distributing a video such as whether or not to combine the frame images 20 of play session videos by the composite image generating unit 50 before transmitting to the client 12.

The distribution settings data 72 in this embodiment includes, for example, the user ID of the user of the client 12 to which a video is distributed, a distributed video-associated user ID, which is the user ID of a user the specifics of whose play session are shown in the video to be distributed (one user ID or a plurality of user IDs may be set as the distributed video-associated user ID), composition method data, which indicates a method about combining the frame images 20 (in this embodiment, a value "distribute after composition" is set in the case of distributing the frame images 20 that are combined by the composite image generating unit 50, and a value "distribute before composition" is set in the case of distributing a plurality of play session videos to the client 12 in question to generate the game screen 22 in the client 12 based on the plurality of frame images 20), and screen configuration data, which indicates the screen configuration of the game screen 22.

For example, the distribution management unit 46 in this embodiment identifies, for each client 12, the distribution target video data, the composition necessity data, and the screen configuration data that are associated in the attribute-settings association data 70 with a combination of a display size and a CPU count that is included in the attribute data received from the client 12. Based on these pieces of data, the distribution management unit 46 generates the distribution settings data 72 an example of which is illustrated in FIG. 7. The distribution management unit 46 outputs the generated distribution settings data 72 to the data storage unit 40.

This embodiment discusses an example in which the client 12 of the user A is a portable game terminal that is 3.8 inches in display size, the clients 12 of the user B, the user C, and the user D are game consoles that are 42 inches in display size, the CPU count is 1 in the clients 12 of the user A and the user B, and the CPU count is 2 in the clients 12 of the user C and the user D.

In this case, the distribution management unit 46 identifies "sender user" as the value of the distribution target video data, "unnecessary" as the value of the composition necessity data, and "type A" as the value of the screen configuration data, based on the fact that the attribute data received from the client 12 of the user A indicates 3.8 inches as the display size. Based on the identified values, the distribution management unit 46 generates the distribution settings data 72 that sets "001" as the value of the user ID, "001" as the value of the distributed video-associated user ID, and "type A" as the value of the screen configuration data.

The distribution management unit 46 identifies "all players" as the value of the distribution target video data, "necessary" as the value of the composition necessity data, and "type B" as the value of the screen configuration data, based on the fact that the attribute data received from the client 12 of the user B indicates 42 inches as the display size and 1 as the CPU count. Based on the identified values, the distribution management unit 46 generates the distribution settings data 72 that sets "002" as the value of the user ID, "001, 002, 003, 004" as the value of the distributed video-associated user ID, "distribute after composition" as the value of the composition method data, and "type B" as the value of the screen configuration data.

The distribution management unit 46 identifies "all players" as the value of the distribution target video data, "unnecessary" as the value of the composition necessity data, and a value of the screen configuration data that corresponds to the game screen 22 of FIG. 3, based on the fact that the attribute data received from the clients 12 of the user C and the user D indicates 42 inches as the display size and 2 as the CPU count. Based on the identified values, the distribution management unit 46 generates the distribution settings data 72 that sets "003" as the value of the user ID, "001, 002, 003, 004" as the value of the distributed video-associated user ID, "distribute before composition" as the value of the composition method data, and "type B" as the value of the screen configuration data, and the distribution settings data 72 that sets "004" as the value of the user ID, "001, 002, 003, 004" as the value of the distributed video-associated user ID, "distribute before composition" as the value of the composition method data, and "type B" as the value of the screen configuration data.

The data transmitting unit 44 of the cloud service 10 then transmits each piece of distribution settings data 72 to the client 12 that is identified by a user ID value contained in the piece of distribution settings data 72. The data receiving unit 60 of each client 12 receives the distribution settings data 72. The distribution settings management unit 64 of the client 12 outputs the received distribution settings data 72 to the memory device included in the client 12.

The distribution management unit 46 of the cloud service 10 activates the emulators 34 and loads an image file of the action game onto the activated emulators 34. The distribution management unit 46 connects the activated emulators 34 and the clients 12 of the user A, the user B, the user C, and the user D. The game executing unit 48 then starts executing the loaded action game. The cloud service 10 in this embodiment thus starts executing the action game in a multi-play mode in which the user A, the user B, the user C, and the user D participate as players.

In this embodiment, for a user whose composition method data has no value set in the distribution settings data 72, or a user whose composition method data has a value "distribute before composition", the cloud service 10 executes three types of processing, game situation data updating processing, frame image generating processing, and frame image transmitting processing, in the order stated, for every given game-update-time (e.g., 1/60 seconds) since the start of the action game. The game situation data updating processing is executed by the game executing unit 48 to update game situation data which indicates the situation of a game. The frame image generating processing is executed by the game executing unit 48 to generate the frame images 20 that show the specifics of a game play session based on the updated game situation data. The frame image transmitting processing is executed by the data transmitting unit 44 to transmit the generated frame images 20 to the relevant client 12. In short, the cloud service 10 repeatedly executes processing of sequentially executing the above-mentioned three types of processing at intervals of game-update-time.

In this embodiment, for a user whose composition method data has no value set in the distribution settings data 72, or a user whose composition method data has a value "distribute after composition", the cloud service 10 executes four types of processing, game situation data updating processing, frame image generating processing, composite image generating processing, and frame image transmitting processing, in the order stated, for every given game-update-time (e.g., 1/60 seconds) since the start of the action game. The game situation data updating processing is executed by the game executing unit 48 to update game situation data which indicates the situation of a game. The frame image generating processing is executed by the game executing unit 48 to generate the frame images 20 that show the specifics of a game play session based on the updated game situation data. The composite image generating processing is executed by the composite image generating unit 50 to generate a composite image as the frame image 20 based on the frame images 20 generated by the frame image generating processing. The frame image transmitting processing is executed by the data transmitting unit 44 to transmit the frame image 20 generated by the composite image generating processing to the relevant client 12. In short, the cloud service 10 repeatedly executes processing in which the four types of processing are executed sequentially at intervals of game-update-time. In short, the cloud service 10 repeatedly executes processing of sequentially executing the above-mentioned four types of processing at intervals of game-update-time.

In the frame image generating processing, the game executing unit 48 in this embodiment executes, for example, processing of generating frame images 20 based on game situation data that indicates the updated positions and directions of a group of the objects.

In an example of the composite image generating processing described above, the composite image generating unit 50 in this embodiment obtains the frame images 20 generated by the frame image generating processing, and generates a composite image based on the obtained frame images 20 so that the frame images 20 are placed in the same manner as a screen configuration that is indicated by the screen configuration data contained in the distribution settings data 72. The frame image 20 to be transmitted to the client 12 of the user B in this embodiment is the frame image 20 generated by the composite image generating unit 50. The composite image generating unit 50 generates, for example, a composite image in which the frame image 20 of the play session video of the user B is placed in the upper left section, and the frame images 20 of the play session videos of other users are placed in the upper right section, the lower left section, and the lower right section, as the frame image 20 to be transmitted to the client 12 of the user B.

In an example of the frame image transmitting processing, the data transmitting unit 44 in this embodiment transmits the generated frame image 20 to the relevant client 12 in association with a frame ID, which is an identifier assigned to each frame image 20 in the order of the time of generation, and the user ID of a user the specifics of whose play session are shown in the generated frame image 20.

The data transmitting unit 44 of the cloud service 10 in this embodiment transmits the frame image 20 of a play session video in accordance with settings indicated by the distribution settings data 72. To the client 12 of the user A, for instance, the data transmitting unit 44 of the cloud service 10 transmits the frame image 20 of a play session video that shows the specifics of a play session performed by the user A. To the client 12 of the user B, for instance, the data transmitting unit 44 of the cloud service 10 transmits the game screen 22 of FIG. 3 (the frame image 20 that corresponds to the game screen 22 of FIG. 3) . To the clients 12 of the user C and the user D, for instance, the data transmitting unit 44 of the cloud service 10 transmits the frame image 20 of a play session video that shows the specifics of a play session performed by the user A, the frame image 20 of a play session video that shows the specifics of a play session performed by the user B, the frame image 20 of a play session video that shows the specifics of a play session performed by the user C, and the frame image 20 of a play session video that shows the specifics of a play session performed by the user D. The data transmitting unit 44 of the cloud service 10 in this embodiment thus distributes a single play session video to each of the client 12 of the user A and the client 12 of the user B, and distributes four play session videos to each of the client 12 of the user C and the client 12 of the user D.

The data receiving unit 60 of each client 12 receives (obtains) the frame images 20 transmitted sequentially from the cloud service 10.

The screen generating unit 66 of each client 12 generates the game screen 22 based on the distribution settings data 72 received from the cloud service 10 and the frame images 20 received from the cloud service 10.

In this embodiment, the screen generating unit 66 of the client 12 of the user A, for example, generates the game screen 22 of FIG. 2. The screen generating unit 66 of the client 12 of the user B generates the game screen 22 of FIG. 3 by placing at the center of the game screen 22 the frame image 20 corresponding to the game screen 22 of FIG. 3 which is transmitted from the cloud service 10. In the clients 12 of the user C and the user D, the screen generating unit 66 arranges the respective frame images 20 in the game screen 22 based on the screen configuration data contained in the distribution settings data 72, to thereby generate the game screen 22 similar to FIG. 3 which differs from FIG. 3 in terms of relation between the frame images 20 and sections where the frame images 20 are placed. In this embodiment, the screen generating unit 66 of the client 12 of the user C generates the game screen 22 that places the frame image 20 of a play session video of the user C in the upper left section, and the screen generating unit 66 of the client 12 of the user D generates the game screen 22 that places the frame image 20 of a play session video of the user D in the upper left section.

The screen output unit 68 of each client 12 outputs for display the game screen 22 generated by the screen generating unit 66 of its own client 12 to the display. Each client 12 in this embodiment generates, and outputs for display, the game screen 22 at a given frame rate. Each client 12 in this embodiment outputs for display the frame images 20 in the order of frame IDs associated with the frame images 20. Play session videos are distributed by streaming from the cloud service 10 to the clients 12 in this manner.

As described above, in this embodiment, the number of play session videos distributed from the cloud service 10 to each of the client 12 of the user A and the client 12 of the user B is 1 and the number of play session videos distributed from the cloud service 10 to each of the client 12 of the user C and the client 12 of the user D is 4.

Under the condition that the cloud service 10 is executing a game in which a plurality of users who respectively use a plurality of clients 12 participate in response to requests from the plurality of clients, this embodiment thus varies the screen configuration of the game screen 22 output for display by the clients 12 and the number of play session videos distributed to the clients 12, depending on the display size and CPU count of the client 12 that the user uses. Whether the combining of the frame images 20 is executed by the cloud service 10 or by the client 12 also varies in this embodiment depending on the CPU count of the client 12 that the user uses, even in the case where the game screen 22 of the same screen configuration is output for display by each client 12.

In the game situation updating processing, the game executing unit 48 in this embodiment executes processing of updating game situation data that indicates, for example, the positions and directions of player objects, opponent objects, and other character objects in a game. The game executing unit 48 in this embodiment also executes, in the game situation data updating processing, a collision detection processing between updated objects, game stage clear determining processing based on the result of the collision detection processing, miss determining processing, and the like.

In this embodiment, under the condition that one client 12 receives a key input made by the user such as the press of a button while the game is being executed, key information corresponding to the input (e.g., a signal indicating the type of the pressed button) is transmitted to the cloud service 10. The game executing unit 48 of the cloud service 10 executes an update of game situation data in a manner that reflects the key information (e.g., to move a player object in a direction indicated by the pressed button).

The game situation monitoring unit 52 in this embodiment monitors, for example, the progress of game processing of a game that is being executed by the game executing unit 48. The data storage unit 40 in this embodiment stores in advance the frame images 20 at points in time where given events occur in the game (to give a concrete example, the time when an encounter with a boss character occurs or the start point of a fight with a boss character). These frame images are hereinafter referred to as determination images. The game situation monitoring unit 52 in this embodiment monitors, for example, frame images generated by the game executing unit 48. The game situation monitoring unit 52 uses a known image processing technology and, under the condition that it is confirmed that a monitored frame image matches one of the determination images stored in the data storage unit 40, determines that an event such as an encounter with a boss character or the start of a fight with a boss character has occurred. The time when a given event occurs is thus detected in this embodiment.

Under the condition that an event is detected, the game situation monitoring unit 52 in this embodiment notifies the distribution management unit 46 of the fact. The distribution management unit 46 of the cloud service 10 updates the distribution settings data depending on the detected event.

Under the condition that the distribution management unit 46 in this embodiment receives from the game situation monitoring unit 52 a notification to the effect that an event has occurred in a game played by the user C, for example, the distribution management unit 46 changes the screen configuration data contained in the distribution settings data 72 that has "002", "003", and "004" as user ID values, so that the size of the frame image 20 of the user C is multiplied by a given number of times (e.g., 1.1 times).

The data transmitting unit 44 of the cloud service 10 transmits the changed distribution settings data 72 to the clients 12 of the user B, the user C, and the user D. In the client 12 of the user B, the client 12 of the user C, and the client 12 of the user D each, the distribution settings management unit 64 changes the distribution settings data 72 that has been stored in the memory device included in the client 12. Under the condition that the distribution settings data 72 is changed in this embodiment, the cloud service 10 and the clients 12 execute processing based on the changed distribution settings data. For instance, the composite image generating unit 50 of the cloud service 10 and the screen generating unit 66 of each client 12 in this embodiment generate the game screen 22 based on the changed distribution settings data after the distribution settings data 72 is changed.

Under the condition that an event occurs in a game played by the user C in this embodiment, the area occupied by the frame image 20 of the play session video of the user C is thus expanded in each of the game screens 22 that are output to and displayed on the displays of the clients 12 of the user B, the user C, and the user D. This informs the users of the fact that an event in a game has occurred to the user C.

The network situation monitoring unit 54 in this embodiment monitors the communication situation (e.g., bandwidth) of the computer network 14 which connects the clients 12 and the cloud service 10. Under the condition that the computer network 14 connecting the clients 12 and the cloud service 10 reaches a given upper limit bandwidth or higher, or reaches a given lower limit bandwidth or lower, the network situation monitoring unit 54 notifies the distribution management unit 46 of the fact. The distribution management unit 46 responds to this notification by, for example, changing the distribution settings data 72.

Under the condition that the distribution management unit 46 in this embodiment is notified by the network situation monitoring unit 54 of the fact that the bandwidth has become lower than the given lower limit bandwidth in the computer network 14 connecting the cloud service 10 and the client 12 of the user C, for example, the distribution management unit 46 changes the value of the distributed video-associated user ID to "003", deletes the value of the composition method data, and changes the value of the screen configuration data to "type A" in the distribution settings data 72 that has "003" as the value of the user ID.

The data transmitting unit 44 of the cloud service 10 transmits the changed distribution settings data 72 to the client 12 of the user C. The client 12 of the user C changes the distribution settings data 72 that has been stored in the memory device included in the client 12. In this manner, under the condition that the bandwidth becomes lower than the given lower limit bandwidth in the computer network 14 connecting the cloud service 10 and the client 12 of the user C in this embodiment, the number of the frame images 20 contained in the game screen 22 that is output for display on the display of the client 12 of the user C changes from four to one, and the number of play session videos transmitted from the cloud service 10 to the client 12 of the user C decreases from four to one as well.

It should be understood that, under the condition that the bandwidth becomes the given upper limit bandwidth or higher in the computer network 14 connecting the cloud service 10 and each client 12, the cloud service 10 may increase the number of the frame images 20 contained in the game screen 22 that is output for display on the display of the client 12, and may increase the number of play session videos transmitted from the cloud service 10 to the client 12 as well.

This embodiment is thus capable of changing the screen configurations of the game screens 22 output for display by the clients 12 and the numbers of play session videos transmitted from the cloud service 10 to the clients 12 under the condition that the situation changes with respect to the cloud service 10, the clients 12, and the computer network 14, such as a change in the bandwidth of the computer network 14. The cloud service 10 may also change the screen configurations of the game screens 22 output for display by the clients 12 and the numbers of play session videos transmitted from the cloud service 10 to the clients 12 in response to, for example, a change in load on the cloud service 10 or the clients 12.

Under the condition that the distribution management unit 46 is notified by the network situation monitoring unit 54 of the fact that the bandwidth has become lower than the given lower limit bandwidth in the computer network 14 connecting the cloud service 10 and the client 12 of the user C, for example, the distribution management unit 46 may change the value of the composition method data to "distribute after composition" in the distribution settings data 72 that has "003" as the value of the user ID. After the distribution settings data 72 is changed, the cloud service 10 may transmit a composite image generated by the composite image generating unit 50 to the client 12 of the user C as the frame image 20. This way, under the condition that the situation changes with respect to the cloud service 10, the clients 12, and the computer network 14, such as a change in the bandwidth of the computer network 14, which of the cloud service 10 and the client 12 is to execute the combining of the frame images 20 is switched without changing the screen configuration.

Under the condition that a user uses a touch pad or the like of the user's client 12 to execute an operation of changing the size of one frame image 20 or an operation of changing the display position of the frame image 20 in this embodiment, the data transmitting unit 62 of the client 12 transmits to the cloud service 10 a changing request to change the distribution settings data 72 that reflects the changing operation executed. The changing request is received by the data receiving unit 42 of the cloud service 10. The distribution management unit 46 changes the distribution settings data 72 as requested by the received changing request. The data transmitting unit 44 of the cloud service 10 transmits the changed distribution settings data 72 to the client 12. The distribution settings management unit 64 of the client 12 receives this distribution settings data 72 and changes distribution settings data that has been stored in the memory device. Under the condition that a user uses a mouse or the like to put (focus) a pointer on one frame image 20, for example, the distribution management unit 46 of the cloud service 10 in this embodiment changes the distribution settings data 72 so that this frame image 20 is displayed large.

The present invention is not limited to the embodiment described above.

For example, under the condition that the user C performs a given operation with the use of a controller or the like while four users, the user A, the user B, the user C, and the user D, are playing a game in a multi-play mode as described above, the data transmitting unit 62 of the client 12 of the user C may transmit to the cloud service 10 a request to output for display the screen of the user C in a highlighted manner and the data receiving unit 42 of the cloud service 10 may receive this highlight output for display request. The distribution management unit 46 of the cloud service 10 may respond to the highlight output for display request by changing the distribution settings data 72 so that the frame image 20 of the play session video of the user C is displayed in a highlighted manner (e.g., displaying the frame image 20 of the user C enlarged, or putting a highlight image such as a closing line that makes the frame image 20 stand out around the frame image 20 of the user C). In this case, pieces of distribution settings data 72 that are stored in the memory devices included in the clients 12 of the user B, the user C, and the user D are also changed as described above. In the client 12 of the user B, the client 12 of the user C, and the client 12 of the user D each, the screen outputting unit 68 outputs for display the game screen 22 that displays the frame image 20 of the play session video of the user C in a highlighted manner to the display.

This way, when the user C wishes to draw the attention of other users to his/her play during a game played in a multi-play mode by four users, the user A, the user B, the user C, and the user D, for example, the user C can prompt other users to pay attention to his/her play.

The distribution target video data included in the attribute-settings association data 70 in association with given attributes may indicate, for example, the number of distribution target videos or an upper limit to the number of distribution target videos. To give a concrete example, "2" or "upper limit: 2" may be set as the value of the distribution target video data. The screen configuration data included in the attribute-settings association data 70 may indicate the screen configuration of the game screen 22 in which as many frame images 20 as a number set in the distribution target video data are placed.

In the case where the attribute data received by the cloud service 10 indicates the given attributes described above, for example, the distribution management unit 46 of the cloud service 10 may then generate the distribution settings data 72 containing the distributed video-associated user ID that indicates as many user IDs as a distribution target video count (or upper limit count) indicated by the distribution target video data which are selected out of the users playing the game by following a given rule (e.g., the user IDs of users selected randomly from the sender user and other users), and the screen configuration data that indicates the screen configuration described above.

Under the condition that a game is played in a multi-play mode by four players, for example, the screen outputting unit 68 of each client 12 may output to the display the game screen 22 that contains the frame images 20 of play session videos of two users selected out of the four (i.e., that contains two frame images 20).

The distribution management unit 46 of the cloud service 10 may generate the distribution settings data 72 that is suited to, for example, the load on servers that constitute the cloud service 10, a predetermined network bandwidth, the current bandwidth of the computer network 14, the delay time in video transmission, the jitter value, and the packet loss ratio in the computer network 14.

In the case of video distribution from the cloud service 10 to a plurality of clients 12 (including the case where one video is distributed and the case where a plurality of videos are distributed), for example, the cloud service 10 may adjust the quality of streaming based on the load (CPU) on servers that constitute the cloud service 10, the load on the bandwidth of the computer network 14, and the priority level of each streaming distribution (e.g., the priority level based on whether or not a user who uses the client 12 is a member) . For example, the cloud service 10 may lower the bit rate of streaming distribution or the image quality of a video for the client 12 of a user who is not a member.

The cloud service 10 may vary the bit rate of a video to be distributed or the encoding method depending on, for example, whether or not the client 12 in question includes a hardware decoder, whether or not a codec corresponding to the video is installed in the client 12, video encoding load on the cloud service 10, and other situations.

The distribution settings data 72 may include, for example, data other than the distributed video-associated user ID, the composition method data, and the screen configuration data, or may not include at least one of the distributed video-associated user ID, the composition method data, and the screen configuration data. The distribution settings data 72 may include, for example, a buffer size to be secured by the client 12 in question, an acceptable delay time, the frame rate, the bit rate, data indicating a distribution protocol (e.g., data indicating whether the distribution is by TCP or by UDP), and data indicating a communication path or the like. The data transmitting unit 44 of the cloud service 10 may distribute play session videos using a bit rate, a distribution protocol, a communication path, or the like that is indicated by the distribution settings data 72. The client 12 may secure a buffer size indicated by the distribution settings data 72. The screen generating unit 66 of the client 12 may generate a screen at a frame rate indicated by the distribution settings data 72. The screen generating unit 66 of the client 12 may place the frame images 20 in the game screen 22 at a resolution indicated by the distribution settings data 72.

The distribution management unit 46 may determine values that are indicated by the distribution settings data 72 based on factors other than the CPU count and the display size (e.g., the bandwidth of the computer network 14, the load on the cloud service 10, the name of the client 12 in question, the CPU type, the hard disk capacity, the memory size, the maximum communication speed, the presence or absence of a touch pad, and the type (which one of a personal computer, a game console, a television set, a portable game device, and a portable information terminal the client 12 is)).

The distribution management unit 46 may generate, for example, the distribution settings data 72 in which a resolution value suited to the size of the frame image 20 in question is set. In other words, there may be a correlation between the size of the frame image 20 and the resolution in the game screen 22.

Each client 12 may output the game screen 22 to the display via a web browser, or may output the game screen 22 to the display as a screen generated by a client program.

The data storage unit 40 of the cloud service 10 may store data indicating a numerical expression for calculating a value that is indicated by the distribution settings data 72. The distribution management unit 46 of the cloud service 10 may generate the distribution settings data 72 in which a set value calculated by the numerical expression is set.

The data transmitting unit 44 of the cloud service 10 may transmit, to each client 12, as videos to be placed in one screen, videos in a number that is determined by, for example, a given rule different from the rules given above. The screen generating unit 66 of the client 12 may generate the game screen 22 that contains as many frame images 20 of videos as the determined number. The screen generating unit 66 of the client 12 may generate, for example, the game screen 22 in which a plurality of frame images 20 are placed at settings that follow a given rule different from the rules given above.

The embodiment described above may be applied to, for example, a case where a user watches how the same game is played in a multi-play mode by other users. In this case, the game screen 22 contains at least one frame image 20 of a play session video of another user. The processing described above may be applied to, for example, the case where a user is watching a racing game or the like played by a plurality of players. For instance, under the condition that an event such as a player setting a new lap time record, the race entering the final lap, or the finish line being crossed occurs, the distribution management unit 46 of the cloud service 10 may change the distribution settings data 72 so that the frame image 20 of a play session video of a user who has caused the event is enlarged.

The embodiment may also be applied to, for example, a case where a user watches a plurality of play session videos showing the specifics of play sessions of various games that are played by other users. In this case, the distribution management unit 46 of the cloud service 10 may generate the distribution settings data 72 based on the number of users currently viewing a play session video which is calculated from the number of clients 12 connected to the relevant emulator 34, or based on the number of users who have viewed the play session videos which is calculated from the connection history of connection between the emulator 34 and the clients 12. For example, the generated distribution settings data 72 may be set so that the frame image 20 of a play session video is larger in size under the condition that the number of users viewing the play session video is larger.

The embodiment may also be applied to, for example, a case where a user watches games being played by other users while enjoying playing a game himself/herself. In this case, the game screen 22 includes the frame image 20 of a play session video that shows the specifics of the user's own play and the frame images 20 of play session videos that show the specifics of other users' play. The distribution management unit 46 in this case may set the distribution settings data 72 so that the frame image 20 of the play session video that shows the specifics of the user's own play is larger in size than the frame images 20 of the play session videos that show the specifics of other users' play, or so that the frame image 20 of the play session video that shows the specifics of the user's own play is higher in image quality than the frame images 20 of the play session videos that show the specifics of other users' play. The distribution management unit 46 may also set the distribution settings data 72 so that the frame image 20 of a play session video of a game that is the same type or the same as the game that the user is playing is larger in size than the rest of the frame images 20, or so that the frame image 20 of a play session video of a game that is the same type or the same as the game that the user is playing is higher in image quality than the rest of the frame images 20. The screen generating unit 66 may thus generate the game screen 22 in which the frame images 20 are placed at settings that are determined by the relation between a game for which the specifics of a play session are shown in the frame image 20, and a game that is being played by the user to whom the game screen 22 is presented. The screen generating unit 66 may also generate, for example, the game screen 22 in which the frame images 20 are placed so that the frame image 20 having a stronger relation between a game for which the specifics of a play session are shown in the frame image 20, and a game that is being played by the user to whom the game screen 22 is presented is higher in image quality.

The embodiment described above may be applied not only to the distribution of a play session video but also to the case of distribution of a replay video, which is a video showing the specifics of a game play session that has already been executed. For instance, the data storage unit 40 of the cloud service 10 may store a replay video as a video showing the specifics of a game play session that has already been executed. The data transmitting unit 44 of the cloud service 10 may transmit the frame image 20 of the replay video to the clients 12. In other words, the game screen 22 may include the frame image 20 of the replay video. The replay video may be a video encoded by Scalable Video Coding (SVC) . The data transmitting unit 44 of the cloud service 10 may distribute the replay video to the clients 12 at an image quality and a resolution that conform to a distribution method indicated by the distribution settings data 72.

The distribution management unit 46 may generate, for example, the distribution settings data 72 that indicates the priority levels and priority order of the frame images 20 contained in the game screen 22. The screen generating unit 66 of each client 12 may arrange the frame images 20 in the game screen 22 based on the priority levels and the priority order that are indicated by the distribution settings data 72. The distribution management unit 46 may generate, for example, the distribution settings data 72 for a user in which the priority level set to the frame image 20 of a play session video that shows the situation of a game played by the user is higher than the priority level of the frame image 20 of a play session video that shows the situation of a game watched by the user. Based on this distribution settings data 72, the screen generating unit 66 of the client 12 may generate the game screen 22 so that in the game screen 22, the frame image 20 of the play session video that shows the situation of the game played by the user is larger than the frame image 20 of the play session video that shows the situation of the game watched by the user.

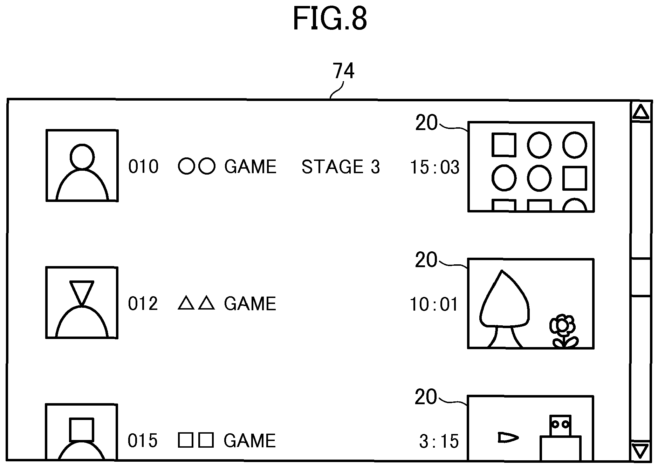

The embodiment described above may be applied when, for example, a friend displaying screen 74, which is a screen for displaying a list of users who are registered as users who have relevance to a user (hereinafter referred to as friends), is displayed as illustrated in FIG. 8. The friend displaying screen 74 of FIG. 8 includes, for each friend who is executing a game in the cloud service 10, an avatar image of the friend, the user ID of a user who is the friend, the game title of the game played by the user, the name of a game stage at which the user is playing, the total play time that the user has played the game, and the frame image 20 of the current play session video of the game played by the user. The friend displaying screen 74 can be scrolled. Under the condition that the friend displaying screen 74 is scrolled by a user, the data transmitting unit 62 of the client 12 of the user may transmit to the cloud service 10 a request to change the distribution settings data 72 so that only play session videos that are displayed in the friend displaying screen 74 are displayed by the client 12. In response to this changing request, the cloud service 10 may change the distribution settings data 72 so that the frame images 20 to be displayed in the friend displaying screen 74 are transmitted to the client 12. The system may also be designed so that, under the condition that a user clicks on the frame image 20 of a play session video at the client 12, the user can view the play session video and participate in a game played in the play session video.

The cloud service 10 may transmit to the client 12, for example, key information received from the client 12, in association with data that indicates the time of the reception, instead of the frame image 20 of a play session video. The screen generating unit 66 of the client 12 may generate the game screen 22 based on the key information.

The data storage unit 40 may store in advance, for example, the specifics of an emulated memory image managed by the emulator 34 or a register value at the time when an event has occurred in a game, instead of the determination image. The game situation monitoring unit 52 may monitor the specifics of an emulated memory image managed by the emulator 34 or a register value to detect the occurrence of an event in a game based on the result of comparison between the result of the monitoring and the above-mentioned data stored in the data storage unit 40.

To give yet another example, game situation data may be, for example, data that indicates a parameter or a status in a game. The functions implemented in the cloud service 10 may be implemented by, for example, a single server. The game program does not need to be executed on one of the emulators 34. For instance, the game program may be executed by system software (an operating system or the like) of the cloud service 10 or the clients 12. How the roles are divided between the cloud service 10 and the clients 12 is not limited to the example described above.

Further, the specific numerical values and character strings described above and the specific numerical values and character strings in the drawings are merely exemplary, and the present invention is not limited to those numerical values and character strings.

## Claims

1. An image processing system, comprising:
a video transmitting device (10) ; and
one or more video receiving devices (12-1,...,12-n),
wherein the video transmitting device comprises a video transmitting unit (44) that transmits one or more videos to the one or more video receiving devices, and under a condition that there is a change in load on the video transmitting device or one or more of the video receiving devices, or in a situation of communication between the video transmitting device and the one or more video receiving devices, the video transmitting unit changes the number of videos that are transmitted as videos to be placed in one screen (22) depending on the change,
wherein if the change in load is a decrease the number of videos that are transmitted is increased, and if the change in load is an increase the number of videos that are transmitted is decreased,
wherein each video receiving device comprises a screen generating unit (66) that generates a screen that contains frame images (20) of videos which are received as videos to be placed in one screen,
wherein the video transmitting unit transmits, to each video receiving device, as videos to be placed in one screen, videos in a number determined in accordance with a given rule, and
wherein the screen generating unit generates a screen that contains as many frame images of videos as the determined number.

2. The image processing system according to claim 1,
wherein, depending on whether or not a given condition is satisfied, the video transmitting unit switches between transmitting a plurality of videos to the one or more video receiving devices as videos to be placed in one screen, and transmitting, to each video receiving device, as videos to be placed in one screen, a video whose frame image is a composite image in which respective frame images of the plurality of videos are combined, and
wherein, under a condition that the one or more screen generating units receive the plurality of videos, each screen generating unit generates a screen by combining respective frame images of the plurality of videos and, under a condition that each screen generating unit receives the video whose frame image is the composite image, each screen generating unit generates a screen that contains the frame image of the video.

3. The image processing system according to claim 2, wherein the video transmitting unit switches between transmitting a plurality of videos to the one or more video receiving devices as videos to be placed in one screen, and transmitting, to the one or more video receiving devices, as videos to be placed in one screen, a video whose frame image is a composite image in which respective frame images of the plurality of videos are combined, depending on attributes of the video receiving device.

4. The image processing system according to claim 2, wherein the video transmitting unit switches between transmitting a plurality of videos to the one or more video receiving devices as videos to be placed in one screen, and transmitting, to the one or more video receiving devices, as videos to be placed in one screen, a video whose frame image is a composite image in which respective frame images of the plurality of videos are combined, depending on a situation of communication between the video transmitting device and each of the video receiving devices.

5. The image processing system according to claim 1, wherein the video transmitting unit transmits, to the one or more video receiving devices, as videos to be placed in one screen, as many videos as the determined number which are selected from a plurality of candidate videos in accordance with a given standard.

6. An image processing method, comprising:
a video transmitting step of transmitting, by a video transmitting device, a video to one or more video receiving devices and under a condition that there is a change in load on the video transmitting device or the one or more video receiving devices, or in a situation of communication between the video transmitting device and the one or more video receiving devices, the number of videos that are transmitted as videos to be placed in one screen is changed depending on the change; and
a screen generating step of generating, by each of the video receiving devices, a screen that contains frame images of videos which are received as videos to be placed in one screen,
wherein if the change in load is a decrease the number of videos that are transmitted is increased, and if the change in load is an increase the number of videos that are transmitted is decreased,
wherein the video transmitting step comprises transmitting, to the one or more video receiving devices, as videos to be placed in one screen, videos in a number determined in accordance with a given rule, and
wherein the screen generating step comprises generating a screen that contains as many frame images of videos as the determined number.

7. A video transmitting device, comprising a video transmitting unit that transmits a video to one or more video receiving devices, which generates a screen that contains frame images of videos which are received as videos to be placed in one screen,
wherein the video transmitting unit transmits, as videos to be placed in one screen, videos in a number determined in accordance with a given rule to the one or more video receiving device, each of which generates a screen that contains as many frame images of videos as the determined number,
wherein under a condition that there is a change in load on the video transmitting device or one or more of the video receiving devices, or in a situation of communication between the video transmitting device and the one or more video receiving devices, the video transmitting unit changes the number of videos that are transmitted as videos to be placed in one screen depending on the change,
wherein if the change in load is a decrease the number of videos that are transmitted is increased, and if the change in load is an increase the number of videos that are transmitted is decreased.

8. A set of one or more video receiving devices, each comprising a screen generating unit that generates a screen that contains frame images of videos received as videos to be placed in one screen from a video transmitting device, which comprises a video transmitting unit that transmits a video,
wherein each screen generating unit receives videos transmitted from the video transmitting unit, as videos to be placed in one screen, in a number determined in accordance with a given rule, and generates a screen that contains as many frame images of videos as the determined number,
wherein under a condition that there is a change in load on the video transmitting device or one or more of the video receiving devices, or in a situation of communication between the video transmitting device and the one or more video receiving devices, the video transmitting unit changes the number of videos that are transmitted as videos to be placed in one screen depending on the change,
wherein if the change in load is a decrease the number of videos that are transmitted is increased, and if the change in load is an increase the number of videos that are transmitted is decreased.

9. A program stored in a non-transitory computer-readable information storage medium, which is to be executed by a computer, the program including instructions to transmit a video to one or more video receiving devices, each of which generates a screen that contains frame images of videos which are received as videos to be placed in one screen,
wherein the instructions to transmit include instructions to transmit, as videos to be placed in one screen, videos in a number determined in accordance with a given rule to the one or more video receiving devices, each of which generates a screen that contains as many frame images of videos as the determined number,
wherein under a condition that there is a change in load on the video transmitting device or one or more of the video receiving devices, or in a situation of communication between the video transmitting device and the one or more video receiving devices, the video transmitting unit changes the number of videos that are transmitted as videos to be placed in one screen depending on the change,
wherein if the change in load is a decrease the number of videos that are transmitted is increased, and if the change in load is an increase the number of videos that are transmitted is decreased.

10. A non-transitory computer-readable information storage medium storing a program according to claim 9.

11. A program stored in a non-transitory computer-readable information storage medium, which is to be executed by a computer, the program including instructions to generate a screen that contains frame images of videos received as videos to be placed in one screen from a video transmitting device, which comprises a video transmitting unit that transmits a video,
wherein the instructions to generate include instructions to receive videos transmitted from the video transmitting unit, as videos to be placed in one screen, in a number determined in accordance with a given rule, and generates a screen that contains as many frame images of videos as the determined number,
wherein under a condition that there is a change in load on the video transmitting device or one or more of the video receiving devices, or in a situation of communication between the video transmitting device and the one or more video receiving devices, the video transmitting unit changes the number of videos that are transmitted as videos to be placed in one screen depending on the change,
wherein if the change in load is a decrease the number of videos that are transmitted is increased, and if the change in load is an increase the number of videos that are transmitted is decreased.

12. A non-transitory computer-readable information storage medium storing a program according to claim 11.

## Patentansprüche

1. Bildverarbeitungssystem, das Folgendes umfasst:
eine Videoübertragungsvorrichtung (10) und
eine oder mehrere Videoempfangsvorrichtungen (12-1, ..., 12-n),
wobei die Videoübertragungsvorrichtung eine Videoübertragungseinheit (44) umfasst, die ein oder mehrere Videos zu der einen oder den mehreren Videoempfangsvorrichtungen überträgt, und unter einer Bedingung, dass an der Videoübertragungsvorrichtung oder einer oder mehreren der Videoempfangsvorrichtungen eine Laständerung erfolgt, oder in einer Situation der Kommunikation zwischen der Videoübertragungsvorrichtung und der einen oder den mehreren Videoempfangsvorrichtungen die Videoübertragungseinheit die Anzahl von Videos,
die als Videos, die auf einem Bildschirm (22) zu platzieren sind, übertragen werden, in Abhängigkeit von der Änderung ändert, wobei, wenn die Laständerung eine Verringerung ist, die Anzahl von Videos, die übertragen werden, erhöht wird, und wenn die Laständerung eine Erhöhung ist, die Anzahl von Videos, die übertragen werden, verringert wird,
wobei jede Videoempfangsvorrichtung eine Bildschirmerzeugungseinheit (66) umfasst, die einen Bildschirm erzeugt, der Rahmenbilder (20) von Videos enthält, die als Videos, die auf einem Bildschirm zu platzieren sind, empfangen werden,
wobei die Videoübertragungseinheit als Videos, die auf einem Bildschirm zu platzieren sind, Videos in einer Anzahl, die gemäß einer gegebenen Regel bestimmt wird, zu jeder Videoempfangsvorrichtung überträgt und
wobei die Bildschirmerzeugungseinheit einen Bildschirm erzeugt, der so viele Rahmenbilder von Videos wie die bestimmte Anzahl enthält.

2. Bildverarbeitungssystem nach Anspruch 1,
wobei in Abhängigkeit davon, ob eine gegebene Bedingung erfüllt ist oder nicht, die Videoübertragungseinheit zwischen dem Übertragen einer Vielzahl von Videos als Videos, die auf einem Bildschirm zu platzieren sind, zu der einen oder den mehreren Videoempfangsvorrichtungen und dem Übertragen eines Videos, dessen Rahmenbild ein zusammengesetztes Bild ist, in dem jeweilige Rahmenbilder der Vielzahl von Videos kombiniert sind, als Videos, die auf einem Bildschirm zu platzieren sind, zu jeder Videoempfangsvorrichtung wechselt und
wobei unter einer Bedingung, dass die eine oder die mehreren Bildschirmerzeugungseinheiten die Vielzahl von Videos empfangen, jede Bildschirmerzeugungseinheit einen Bildschirm durch Kombinieren von jeweiligen Rahmenbildern der Vielzahl von Videos erzeugt und unter einer Bedingung, dass jede Bildschirmerzeugungseinheit das Video, dessen Rahmenbild das zusammengesetzte Bild ist, empfängt, jede Bildschirmerzeugungseinheit einen Bildschirm erzeugt, der das Rahmenbild des Videos enthält.

3. Bildverarbeitungssystem nach Anspruch 2, wobei die Videoübertragungseinheit in Abhängigkeit von Attributen der Videoempfangsvorrichtung zwischen dem Übertragen einer Vielzahl von Videos als Videos, die auf einem Bildschirm zu platzieren sind, zu der einen oder den mehreren Videoempfangsvorrichtungen und dem Übertragen eines Videos, dessen Rahmenbild ein zusammengesetztes Bild ist, in dem jeweilige Rahmenbilder der Vielzahl von Videos kombiniert sind, als Videos, die auf einem Bildschirm zu platzieren sind, zu der einen oder den mehreren Videoempfangsvorrichtungen wechselt.

4. Bildverarbeitungssystem nach Anspruch 2, wobei die Videoübertragungseinheit in Abhängigkeit von einer Situation der Kommunikation zwischen der Videoübertragungsvorrichtung und jeder der Videoempfangsvorrichtungen zwischen dem Übertragen einer Vielzahl von Videos als Videos, die auf einem Bildschirm zu platzieren sind, zu der einen oder den mehreren Videoempfangsvorrichtungen und dem Übertragen eines Videos, dessen Rahmenbild ein zusammengesetztes Bild ist, in dem jeweilige Rahmenbilder der Vielzahl von Videos kombiniert sind, als Videos, die auf einem Bildschirm zu platzieren sind, zu der einen oder den mehreren Videoempfangsvorrichtungen wechselt.

5. Bildverarbeitungssystem nach Anspruch 1, wobei die Videoübertragungseinheit so viele Videos wie die bestimmte Anzahl, die aus einer Vielzahl von Videokandidaten gemäß einem gegebenen Standard ausgewählt werden, als Videos, die auf einem Bildschirm zu platzieren sind, zu der einen oder den mehreren Videoempfangsvorrichtungen überträgt.

6. Bildverarbeitungsverfahren, das Folgendes umfasst:
einen Videoübertragungsschritt des Übertragens eines Videos durch eine Videoübertragungsvorrichtung zu einer oder mehreren Videoempfangsvorrichtungen und unter, einer Bedingung, dass an der Videoübertragungsvorrichtung oder der einen oder den mehreren Videoempfangsvorrichtungen eine Laständerung erfolgt, oder in einer Situation der Kommunikation zwischen der Videoübertragungsvorrichtung und der einen oder den mehreren Videoempfangsvorrichtungen die Anzahl von Videos, die als Videos, die auf einem Bildschirm zu platzieren sind, übertragen werden, in Abhängigkeit von der Änderung geändert wird; und
einen Bildschirmerzeugungsschritt des Erzeugens eines Bildschirms, der Rahmenbilder von Videos enthält, die als Videos empfangen werden, die auf einem Bildschirm zu platzieren sind, durch jede der Videoempfangsvorrichtungen,
wobei, wenn die Laständerung eine Verringerung ist, die Anzahl von Videos, die übertragen werden, erhöht wird, und wenn die Laständerung eine Erhöhung ist, die Anzahl von Videos, die übertragen werden, verringert wird,
wobei der Videoübertragungsschritt das Übertragen von Videos als Videos, die auf einem Bildschirm zu platzieren sind, in einer Anzahl, die gemäß einer gegebenen Regel bestimmt wird, zu der einen oder den mehreren Videoempfangsvorrichtungen umfasst und
wobei der Bildschirmerzeugungsschritt das Erzeugen eines Bildschirms, der so viele Rahmenbilder von Videos wie die bestimmte Anzahl enthält, umfasst.

7. Videoübertragungsvorrichtung, die eine Videoübertragungseinheit umfasst, die ein Video zu einer oder mehreren Videoempfangsvorrichtungen überträgt, die einen Bildschirm erzeugt, der Rahmenbilder von Videos enthält, die als Videos empfangen werden, die auf einem Bildschirm zu platzieren sind,
wobei die Videoübertragungseinheit als Videos, die auf einem Bildschirm zu platzieren sind, Videos in einer Anzahl, die gemäß einer gegebenen Regel bestimmt wird, zu der einen oder den mehreren Videoempfangsvorrichtungen überträgt, von denen jede einen Bildschirm erzeugt, der so viele Rahmenbilder von Videos wie die bestimmte Anzahl enthält,
wobei unter einer Bedingung, dass an der Videoübertragungsvorrichtung oder einer oder mehreren der Videoempfangsvorrichtungen eine Laständerung erfolgt, oder in einer Situation der Kommunikation zwischen der Videoübertragungsvorrichtung und der einen oder den mehreren Videoempfangsvorrichtungen die Videoübertragungseinheit die Anzahl von Videos, die als Videos, die auf einem Bildschirm zu platzieren sind, übertragen werden, in Abhängigkeit von der Änderung ändert,
wobei, wenn die Laständerung eine Verringerung ist, die Anzahl von Videos, die übertragen werden, erhöht wird, und wenn die Laständerung eine Erhöhung ist, die Anzahl von Videos, die übertragen werden, verringert wird.

8. Satz aus einer oder mehreren Videoempfangsvorrichtungen, von denen jede eine Bildschirmerzeugungseinheit umfasst, die einen Bildschirm erzeugt, der Rahmenbilder von Videos enthält, die als Videos, die auf einem Bildschirm zu platzieren sind, von einer Videoübertragungsvorrichtung empfangen werden, die eine Videoübertragungseinheit umfasst, die ein Video überträgt,
wobei jede Bildschirmerzeugungseinheit als Videos, die auf einem Bildschirm zu platzieren sind, Videos, die von der Videoübertragungseinheit übertragen werden, in einer Anzahl empfängt, die gemäß einer gegebenen Regel bestimmt wird, und einen Bildschirm erzeugt, der so viele Rahmenbilder von Videos wie die bestimmte Anzahl enthält,
wobei unter einer Bedingung, dass an der Videoübertragungsvorrichtung oder einer oder mehreren der Videoempfangsvorrichtungen eine Laständerung erfolgt, oder in einer Situation der Kommunikation zwischen der Videoübertragungsvorrichtung und der einen oder den mehreren Videoempfangsvorrichtungen die Videoübertragungseinheit die Anzahl von Videos, die als Videos, die auf einem Bildschirm zu platzieren sind, übertragen werden, in Abhängigkeit von der Änderung ändert,
wobei, wenn die Laständerung eine Verringerung ist, die Anzahl von Videos, die übertragen werden, erhöht wird, und wenn die Laständerung eine Erhöhung ist, die Anzahl von Videos, die übertragen werden, verringert wird.

9. Programm, das auf einem nichttransitorischen computerlesbaren Informationsspeichermedium gespeichert und von einem Computer auszuführen ist, wobei das Programm Anweisungen zum Übertragen eines Videos zu einer oder mehreren Videoempfangsvorrichtungen beinhaltet, von denen jede einen Bildschirm erzeugt, der Rahmenbilder von Videos enthält, die als Videos, die auf einem Bildschirm zu platzieren sind, empfangen werden, wobei die Anweisungen zum Übertragen Anweisungen zum Übertragen von Videos als Videos, die auf einem Bildschirm zu platzieren sind, in einer Anzahl, die gemäß einer gegebenen Regel bestimmt wird, zu der einen oder den mehreren Videoempfangsvorrichtungen, von denen jede einen Bildschirm erzeugt, der so viele Rahmenbilder von Videos wie die bestimmte Anzahl enthält, beinhaltet,
wobei unter einer Bedingung, dass an der Videoübertragungsvorrichtung oder einer oder mehreren der Videoempfangsvorrichtungen eine Laständerung erfolgt, oder in einer Situation der Kommunikation zwischen der Videoübertragungsvorrichtung und der einen oder den mehreren Videoempfangsvorrichtungen die Videoübertragungseinheit die Anzahl von Videos, die als Videos, die auf einem Bildschirm zu platzieren sind, übertragen werden, in Abhängigkeit von der Änderung ändert,
wobei, wenn die Laständerung eine Verringerung ist, die Anzahl von Videos, die übertragen werden, erhöht wird, und wenn die Laständerung eine Erhöhung ist, die Anzahl von Videos, die übertragen werden, verringert wird.

10. Nichttransitorisches computerlesbares Informationsspeichermedium, auf dem ein Programm nach Anspruch 9 gespeichert ist.

11. Programm, das auf einem nichttransitorischen computerlesbaren Informationsspeichermedium gespeichert und von einem Computer auszuführen ist, wobei das Programm Anweisungen zum Erzeugen eines Bildschirms beinhaltet, der Rahmenbilder von Videos enthält, die als Videos, die auf einem Bildschirm zu platzieren sind, von einer Videoübertragungsvorrichtung empfangen werden, die eine Videoübertragungseinheit umfasst, die ein Video überträgt,
wobei die Anweisungen zum Erzeugen Anweisungen zum Empfangen von Videos, die von der Videoübertragungseinheit übertragen werden, als Videos, die auf einem Bildschirm zu platzieren sind, in einer Anzahl, die gemäß einer gegebenen Regel bestimmt wird, beinhalten und einen Bildschirm erzeugen, der so viele Rahmenbilder von Videos wie die bestimmte Anzahl enthält,
wobei unter einer Bedingung, dass an der Videoübertragungsvorrichtung oder einer oder mehreren der Videoempfangsvorrichtungen eine Laständerung erfolgt, oder in einer Situation der Kommunikation zwischen der Videoübertragungsvorrichtung und der einen oder den mehreren Videoempfangsvorrichtungen die Videoübertragungseinheit die Anzahl von Videos, die als Videos, die auf einem Bildschirm zu platzieren sind, übertragen werden, in Abhängigkeit von der Änderung ändert,
wobei, wenn die Laständerung eine Verringerung ist, die Anzahl von Videos, die übertragen werden, erhöht wird, und wenn die Laständerung eine Erhöhung ist, die Anzahl von Videos, die übertragen werden, verringert wird.

12. Nichttransitorisches computerlesbares Informationsspeichermedium, auf dem ein Programm nach Anspruch 11 gespeichert ist.

## Revendications

1. Système de traitement d'image comprenant :
un dispositif de transmission de vidéo (10) ; et
un ou plusieurs dispositifs de réception de vidéo (12-1, ..., 12-n),
dans lequel le dispositif de transmission de vidéo comprend une unité de transmission de vidéo (44) qui transmet une ou plusieurs vidéos au ou aux dispositifs de réception de vidéo, et à condition qu'il y ait un changement de charge sur le dispositif de transmission de vidéo ou sur un ou plusieurs des dispositifs de réception de vidéo, ou dans une situation de communication entre le dispositif de transmission de vidéo et le ou les dispositifs de réception de vidéo, l'unité de transmission de vidéo modifie le nombre de vidéos qui sont transmises en tant que vidéos qui doivent être placées dans un seul écran (22) en fonction du changement,
dans lequel, si le changement de charge est une baisse, le nombre de vidéos qui sont transmises est accru et si le changement de charge est une augmentation, le nombre de vidéos qui sont transmises est réduit,
dans lequel chaque dispositif de réception de vidéo comprend une unité de génération d'écran (66) qui génère un écran qui contient des images de trame (20) de vidéos qui sont reçues en tant que vidéos qui doivent être placées dans un seul écran,
dans lequel l'unité de transmission de vidéo transmet, à chaque dispositif de réception de vidéo, en tant que vidéos qui doivent être placées dans un seul écran, des vidéos selon un nombre déterminé en fonction d'une règle donnée et
dans lequel l'unité de génération d'écran génère un écran qui contient autant d'images de trame de vidéos que le nombre déterminé.

2. Système de traitement d'image selon la revendication 1,
dans lequel, selon qu'une condition données est, ou non, remplie, l'unité de transmission de vidéo commute entre la transmission d'une pluralité de vidéos au ou aux dispositifs de réception de vidéo en tant que vidéos qui doivent être placées dans un seul écran et la transmission, à chaque dispositif de réception de vidéo, en tant que vidéos qui doivent être placées dans un seul écran, d'une vidéo dont une image de trame est une image composite dans laquelle des images de trame respectives de la pluralité de vidéos sont combinées, et
dans lequel, à condition que la ou les unités de génération d'écran reçoivent la pluralité de vidéos, chaque unité de génération d'écran génère un écran en combinant des images de trame respectives de la pluralité de vidéos et, à condition que chaque unité de génération d'écran reçoive la vidéo dont une image de trame est l'image composite, chaque unité de génération d'écran génère un écran qui contient l'image de trame de la vidéo.

3. Système de traitement d'image selon la revendication 2, dans lequel l'unité de transmission de vidéo commute entre la transmission d'une pluralité de vidéos au ou aux dispositifs de réception de vidéo en tant que vidéos qui doivent être placées dans un seul écran et la transmission, au ou aux dispositifs de réception de vidéo, en tant que vidéos qui doivent être placées dans un seul écran, d'une vidéo dont une image de trame est une image composite dans laquelle des images de trame respectives de la pluralité de vidéos sont combinées, en fonction d'attributs du dispositif de réception de vidéo.

4. Système de traitement d'image selon la revendication 2, dans lequel l'unité de transmission de vidéo commute entre la transmission d'une pluralité de vidéos au ou aux dispositifs de réception de vidéo en tant que vidéos qui doivent être placées dans un seul écran et la transmission, au ou aux dispositifs de réception de vidéo, en tant que vidéos qui doivent être placées dans un seul écran, d'une vidéo dont une image de trame est une image composite dans laquelle des images de trame respectives de la pluralité de vidéos sont combinées, en fonction d'une situation de communication entre le dispositif de transmission de vidéo et chacun des dispositifs de réception de vidéo.

5. Système de traitement d'image selon la revendication 1, dans lequel l'unité de transmission de vidéo transmet, au ou aux dispositifs de réception de vidéo, en tant que vidéos qui doivent être placées dans un seul écran, autant de vidéos que le nombre déterminé de vidéos qui sont sélectionnées parmi une pluralité de vidéos candidates en fonction d'une norme donnée.

6. Procédé de traitement d'image comprenant :
une étape de transmission de vidéo consistant à transmettre, au moyen d'un dispositif de transmission de vidéo, une vidéo à un ou plusieurs dispositifs de réception de vidéo et à condition qu'il y ait un changement de charge sur le dispositif de transmission de vidéo ou sur le ou les dispositifs de réception de vidéo, ou dans une situation de communication entre le dispositif de transmission de vidéo et le ou les dispositifs de réception de vidéo, le nombre de vidéos qui sont transmises en tant que vidéos qui doivent être placées dans un seul écran est changé en fonction du changement ; et
une étape de génération d'écran consistant à générer, au moyen de chacun des dispositifs de réception de vidéo, un écran qui contient des images de trame de vidéos qui sont reçues en tant que vidéos qui doivent être placées dans un seul écran,
dans lequel, si le changement de charge est une baisse, le nombre de vidéos qui sont transmises est accru et si le changement de charge est une augmentation, le nombre de vidéos qui sont transmises est réduit,
dans lequel l'étape de transmission de vidéo consiste à transmettre, au ou aux dispositifs de réception de vidéo, en tant que vidéos qui doivent être placées dans un seul écran, des vidéos selon un nombre déterminé en fonction d'une règle donnée et
dans lequel l'étape de génération d'écran consiste à générer un écran qui contient autant d'images de trame de vidéos que le nombre déterminé.

7. Dispositif de transmission de vidéo comprenant une unité de transmission de vidéo qui transmet une vidéo à un ou plusieurs dispositifs de réception de vidéo, qui génère un écran qui contient des trames d'image de vidéos qui sont reçues en tant que vidéos qui doivent être placées dans un seul écran,
dans lequel l'unité de de transmission de vidéo transmet, en tant que vidéos qui doivent être placées dans un seul écran, des vidéos selon un nombre déterminé en fonction d'une règle donnée, au ou aux dispositifs de réception de vidéo, qui génèrent chacun un écran qui contient autant d'images de trame de vidéos que le nombre déterminé,
dans lequel, à condition qu'il y ait un changement de charge sur le dispositif de transmission de vidéo ou sur un ou plusieurs des dispositifs de réception de vidéo, ou dans une situation de communication entre le dispositif de transmission de vidéo et le ou les dispositifs de réception de vidéo, l'unité de transmission de vidéo modifie le nombre de vidéos qui sont transmises en tant que vidéos qui doivent être placées dans un seul écran en fonction du changement,
dans lequel, si le changement de charge est une baisse, le nombre de vidéos qui sont transmises est accru et si le changement de charge est une augmentation, le nombre de vidéos qui sont transmises est réduit.

8. Ensemble d'un ou de plusieurs dispositifs de réception de vidéo, chacun comprenant une unité de génération d'écran qui génère un écran qui contient des images de trame de vidéos reçues en tant que vidéos qui doivent être placées dans un seul écran, en provenance d'un dispositif de transmission de vidéo, qui comprend une unité de transmission de vidéo qui transmet une vidéo,
dans lequel chaque unité de génération d'écran reçoit des vidéos transmises depuis l'unité de transmission de vidéo, en tant que vidéos qui doivent être placées dans un seul écran, selon un nombre déterminé en fonction d'une règle donnée, et génère un écran qui contient autant d'images de trame de vidéos que le nombre déterminé,
dans lequel, à condition qu'il y ait un changement de charge sur le dispositif de transmission de vidéo ou sur un ou plusieurs des dispositifs de réception de vidéo, ou dans une situation de communication entre le dispositif de transmission de vidéo et le ou les dispositifs de réception de vidéo, l'unité de transmission de vidéo modifie le nombre de vidéos qui sont transmises en tant que vidéos qui doivent être placées dans un seul écran en fonction du changement,
dans lequel, si le changement de charge est une baisse, le nombre de vidéos qui sont transmises est accru et si le changement de charge est une augmentation, le nombre de vidéos qui sont transmises est réduit.

9. Programme stocké dans un support de stockage d'informations non transitoire lisible par ordinateur, qui doit être exécuté par un ordinateur, le programme comprenant des instructions pour transmettre une vidéo à un ou plusieurs dispositifs de réception de vidéo, qui génèrent chacun un écran qui contient des images de trame de vidéos qui sont reçues en tant que vidéos qui doivent être placées dans un seul écran,
dans lequel les instructions de transmission comprennent des instructions de transmettre, en tant que vidéos qui doivent être placées dans un seul écran, des vidéos selon un nombre déterminé en fonction d'une règle donnée, au ou aux dispositifs de réception de vidéo, qui génèrent chacun un écran qui contient autant d'images de trame de vidéos que le nombre déterminé,
dans lequel, à condition qu'il y ait un changement de charge sur le dispositif de transmission de vidéo ou sur un ou plusieurs des dispositifs de réception de vidéo, ou dans une situation de communication entre le dispositif de transmission de vidéo et le ou les dispositifs de réception de vidéo, l'unité de transmission de vidéo modifie le nombre de vidéos qui sont transmises en tant que vidéos qui doivent être placées dans un seul écran en fonction du changement,
dans lequel, si le changement de charge est une baisse, le nombre de vidéos qui sont transmises est accru et si le changement de charge est une augmentation, le nombre de vidéos qui sont transmises est réduit.

10. Support de stockage d'informations non transitoire lisible par ordinateur stockant un programme selon la revendication 9.

11. Programme stocké dans un support de stockage d'informations non transitoire lisible par ordinateur, qui doit être exécuté par un ordinateur, le programme comprenant des instructions pour générer un écran qui contient des images de trame de vidéos reçues en tant que vidéos qui doivent être placées dans un seul écran, en provenance d'un dispositif de transmission de vidéo, qui comprend une unité de transmission de vidéo qui transmet une vidéo,
dans lequel les instructions de génération comprennent des instructions pour recevoir des vidéos transmises depuis l'unité de transmission de vidéo, en tant que vidéos qui doivent être placées dans un seul écran, selon un nombre déterminé en fonction d'une règle donnée, et génèrent un écran qui contient autant d'images de trame de vidéos que le nombre déterminé,
dans lequel, à condition qu'il y ait un changement de charge sur le dispositif de transmission de vidéo ou sur un ou plusieurs des dispositifs de réception de vidéo, ou dans une situation de communication entre le dispositif de transmission de vidéo et le ou les dispositifs de réception de vidéo, l'unité de transmission de vidéo modifie le nombre de vidéos qui sont transmises en tant que vidéos qui doivent être placées dans un seul écran en fonction du changement,
dans lequel, si le changement de charge est une baisse, le nombre de vidéos qui sont transmises est accru et si le changement de charge est une augmentation, le nombre de vidéos qui sont transmises est réduit.

12. Support de stockage d'informations non transitoire lisible par ordinateur stockant un programme selon la revendication 11.
